# EUROPÄISCHE PATENTSCHRIFT

(11) **EP 4 176 480 B1**
(45) Veröffentlichungstag und Bekanntmachung des Hinweises auf die Patenterteilung: **23.10.2024**
(21) Anmeldenummer: 21742327.6
(22) Anmeldetag: 01.07.2021
(51) Int. Cl.: H01M 8/18

(54) **ZELLRAHMEN, ELEKTROCHEMISCHE ZELLE, ZELLSTACK UND VERFAHREN ZUM BETRIEB**
CELL FRAME, ELECTROCHEMICAL CELL, CELL STACK AND OPERATING METHOD
CADRE POUR CELLULE, CELLULE ÉLECTROCHIMIQUE, EMPILEMENT DE CELLULE ET PROCÉDÉ DE FONCTIONNEMENT CORRESPONDANT

(30) Priorität: 01.07.2020 DE 102020117367
(43) Veröffentlichungstag der Anmeldung: 10.05.2023
(73) Patentinhaber: Fraunhofer-Gesellschaft zur Förderung der angewandten Forschung e.V., 80686 München (DE)
(72) Erfinder: GIRSCHIK, Jan, 46045 Oberhausen (DE)
(74) Vertreter: Cohausz & Florack
(86) Internationale Anmeldenummer: PCT/EP2021/068187
(87) Internationale Veröffentlichungsnummer: WO 2022/003106

(56) Entgegenhaltungen:
- DE-A1- 102011 122 010
- US-A1- 2012 058 370
- US-A1- 2017 309 969

## Beschreibung

Die Erfindung betrifft einen Zellrahmen zur Bildung einer elektrochemischen Zelle, insbesondere einer Redox-Flow-Batterie, umfangsseitig umschließend wenigstens einen Zellinnenraum und umfassend wenigstens einen Zuführkanal zum Zuführen von Elektrolyt in den Zellinnenraum, wobei der Zuführkanal eine von dem Zellinnenraum beabstandete Einlassöffnung für den zuzuführenden Elektrolyten und eine an den Zellinnenraum angrenzende Auslassöffnung zum Ausströmen des zuzuführenden Elektrolyten in den Zellinnenraum aufweist. Ferner betrifft die Erfindung eine elektrochemische Zelle und einen Zellstack mit einem solchen Zellrahmen. Darüber hinaus betrifft die Erfindung ein Verfahren zum Betrieb einer solchen elektrochemischen Zelle oder eines solchen Zellstacks.

Elektrochemische Zellen sind in unterschiedlichen Ausgestaltungen bekannt und werden teilweise auch als elektrochemische Reaktoren bezeichnet, da in den elektrochemischen Zellen elektrochemische Reaktionen ablaufen. Die elektrochemischen Zellen können je nach Ihrer Verwendung beispielsweise als galvanische Zellen in Form von elektrochemischen Stromquellen ausgebildet sein, die durch chemische Reaktionen an den verschiedenen Elektroden nutzbare elektrische Energie liefern. Alternativ können die elektrochemischen Zellen aber auch Elektrolysezellen sein, die der Produktion bestimmter Produkte durch Anlegen einer äußeren Spannung dienen. Akkumulatorzellen dienen dabei im Wechsel wie galvanische Zellen als Stromquelle und zudem als Stromspeicher, wie bei einer Elektrolysezelle.

Die vorliegende Erfindung kann bei allen Arten von elektrochemischen Zellen genutzt werden. Ganz besonders bevorzugt ist die Erfindung aber im Zusammenhang mit Akkumulatorzellen und hier bevorzugt im Zusammenhang mit Redox-Flow-Batterien, die selbst bereits lange und in verschiedenen Ausführungen bekannt sind. Solche Ausführungen sind beispielhaft in der EP 0 051 766 A1 und der US 2004/0170893 A1 beschrieben. Ein wichtiger Vorteil der Redox-Flow-Batterien liegt in ihrer Eignung, sehr große Mengen an elektrischer Energie speichern zu können. Die Energie wird dabei in Elektrolyten gespeichert, die platzsparend in sehr großen Tanks bereitgehalten werden können. Die Elektrolyte weisen meist metallische Ionen unterschiedlicher Oxidationsstufen auf. Zur Entnahme von elektrischer Energie aus den Elektrolyten oder zum Wiederaufladen derselben werden die Elektrolyte durch eine sogenannte elektrochemische Zelle gepumpt.

Die elektrochemische Zelle wird dabei aus zwei Halbzellen gebildet, die über einen Separator in Form einer semipermeablen Membran voneinander getrennt sind und jeweils ein Elektrolyt und eine Elektrode aufweisen. Die semipermeable Membran hat die Aufgabe, die Kathode und die Anode einer elektrochemischen Zelle räumlich und elektrisch voneinander zu trennen. Die semipermeable Membran muss daher für Ionen durchlässig sein, welche die Umwandlung der gespeicherten chemischen in elektrische Energie oder umgekehrt bewirken. Semipermeable Membran können beispielsweise aus mikroporösen Kunststoffen sowie Vliesen aus Glasfaser oder Polyethylen und sogenannten Diaphragmen gebildet werden. An beiden Elektroden der elektrochemischen Zelle laufen Redox-Reaktionen ab, wobei von den Elektrolyten an einer Elektrode Elektronen freigesetzt und an der anderen Elektrode Elektronen aufgenommen werden. Die metallischen und/oder nichtmetallischen Ionen der Elektrolyte bilden Redox-Paare und erzeugen folglich ein Redox-Potential. Als Redox-Paare kommen beispielsweise Eisen-Chrom, Polysulfid-Bromid oder Vanadium in Frage. Diese oder auch andere Redox-Paare können grundsätzlich in wässriger oder nicht wässriger Lösung vorliegen.

Die Elektroden einer Zelle, zwischen denen sich infolge der Redoxpotentiale eine Potentialdifferenz ausbildet, sind außerhalb der Zelle, z. B. über einen elektrischen Verbraucher, elektrisch miteinander verbunden. Während die Elektronen außerhalb der Zelle von einer Halbzelle zur anderen gelangen, treten Ionen der Elektrolyte durch die semipermeable Membran direkt von einer Halbzelle zur anderen Halbzelle über. Zum Wiederaufladen der Redox-Flow-Batterie kann an die Elektroden der Halbzellen anstelle des elektrischen Verbrauchers, beispielsweise mittels eines Ladegeräts, eine Potentialdifferenz angelegt werden, durch welche die an den Elektroden der Halbzellen ablaufenden Redox-Reaktionen umgekehrt werden.

Zur Bildung der beschriebenen Zelle werden unter anderem Zellrahmen verwendet, die einen Zellinnenraum umschließen. Dabei umschließen die Zellrahmen den Zellinnenraum typischerweise nicht vollständig, sondern lediglich entlang einer umlaufenden Schmalseite. Mithin läuft der Zellrahmen umfangsseitig umlaufend um den Zellinnenraum um und trennt zwei gegenüberliegende großflächigere Seiten voneinander, die ihrerseits wiederum einer semipermeable Membran oder einer Elektrode zugeordnet sind. Dabei ist die Dicke des Zellrahmens, der von dem Rand des Zellrahmens gebildet wird, typischerweise deutlich geringer als die Breite und die Höhe des Zellrahmens, welche die großflächigeren gegenüberliegenden Seiten definieren.

Jede Halbzelle der elektrochemischen Zelle umfasst einen derartigen Zellrahmen, die beispielsweises im Spritzgussverfahren aus einem thermoplastischen Kunststoff hergestellt werden. Zwischen zwei Zellrahmen wird eine semipermeable Membran angeordnet, die Elektrolyte der Halbzellen in Bezug auf einen konvektiven Stoffaustausch voneinander trennt, eine Diffusion bestimmter Ionen von einer Halbzelle in die andere Halbzelle aber zulässt. Den Zellinnenräumen wird zudem jeweils eine Elektrode derart zugeordnet, dass diese mit den die Zellinnenräume durchströmenden Elektrolyten in Kontakt stehen. Die Elektroden können beispielsweise den Zellinnenraum eines jeden Zellrahmens auf der der semipermeablen Membran abgewandten Seite abschließen. Dabei kann der Zellinnenraum im Wesentlichen frei bleiben und nur durch jeweils einen Elektrolyten gefüllt sein. Die jeweilige Elektrode kann aber auch wenigstens teilweise in dem Zellinnenraum vorgesehen sein. Dann ist die Elektrode typischerweise so ausgebildet, dass der Elektrolyt teilweise durch die Elektrode hindurchströmen kann. Vielfach kommen hier Elektroden mit einer hohen spezifischen Oberfläche in Frage, an der die entsprechenden elektrochemischen Reaktionen entsprechend schnell und/oder umfassend ablaufen können. Dies führt letztlich zu einer hohen volumenspezifischen Leistung der Zelle. Die Zellinnenräume sind aber auch dann, wenn die Elektrode in den Zellinnenraum hineinragt, meist auf der der semipermeablen Membran abgewandten Seite durch die Elektrode verschlossen. Als nicht poröser Teil der Elektroden kommen auch sogenannte bipolare Platten in Frage, die beispielsweise mit einem Reaktor oder einem anderen Stoff beschichtet sein können.

Jeder Zellrahmen weist Öffnungen und Kanäle auf, durch welche der entsprechende Elektrolyt von einer Versorgungsleitung in den jeweiligen Zellinnenraum strömen und von dort wieder abgezogen sowie einer Entsorgungsleitung zugeführt werden kann. Die Elektrolyte der Halbzellen werden dabei über die Versorgungsleitung und die Entsorgungsleitung von einem Vorlagebehälter in einen Sammelbehälter umgepumpt. Dies erlaubt eine erneute Verwendung der Elektrolyte, die folglich weder verworfen noch ersetzt werden müssen.

Umfasst die Redox-Flow-Batterie nur eine einzige Zelle, so befinden sich außerhalb der die Halbzellen bildenden Zellrahmen Versorgungsleitungen für jede Halbzelle und Entsorgungsleitungen für jede Halbzelle. Jeder Zellrahmen weist dabei wenigstens zwei Öffnungen auf, von denen wenigstens eine mit einer Versorgungsleitung verbunden ist, während die wenigstens eine andere Öffnung mit der Entsorgungsleitung verbunden ist. Innerhalb des Zellrahmens ist jede Öffnung mit einem Strömungskanal verbunden, der zum Zellinnenraum geöffnet ist. Dies erlaubt das Zuführen von Elektrolyt von der Versorgungsleitung zum Zellinnenraum über einen Zuführkanal und das Abführen des durch den Zellinnenraum geströmten Elektrolyts über einen Abführkanal. Um den Elektrolyt gleichmäßiger über die Breite des Zellinnenraums zu verteilen und den Elektrolyt gleichmäßiger über die Breite des Zellinnenraums abzuziehen, kann der jeweilige Zuführkanal und/oder Abführkanal zwischen der äußeren Öffnung und dem Zellinnenraum, also im Bereich des Rahmenmantels des Zellrahmens, einmal oder mehrmals verzweigt sein. Alternativ kann in dem Zellrahmen eine Reihe von separaten Zuführkanälen und/oder Abführkanälen zum Zuführen bzw. zum Abführen von Elektrolyt vorgesehen sein. In beiden Fällen tritt der Elektrolyt möglichst gleichmäßig verteilt über die Auslassöffnungen der Zuführkanäle einer Seite des Zellrahmens in den Zellinnenraum ein und wieder möglichst gleich verteilt über die Abführkanäle der anderen Seite des Zellrahmens aus dem Zellinnenraum aus. So wird versucht, eine möglichst gleichmäßige Strömung durch den Zellinnenraum zu erreichen. Die Zuführkanäle sind an ihrem anderen Ende über Einlassöffnungen mit der Versorgungsleitung verbunden. So kann der Elektrolyt von der Versorgungsleitung durch den wenigstens einen Zuführkanal des Zellrahmens jeder Halbzelle in den entsprechenden Zellinnenraum gelangen.

Bedarfsweise wird eine Mehrzahl gleichartiger elektrochemischer Zellen in einer Redox-Flow-Batterie zusammengefasst. Meist werden die Zellen dazu aufeinander gestapelt, weshalb man die Gesamtheit der Zellen auch als Zellstapel oder Zellstack bezeichnet. Die einzelnen Zellen werden meist parallel zueinander von den Elektrolyten durchströmt, während die Zellen meist elektrisch hintereinander geschaltet werden. Die Zellen sind also meist hydraulisch parallel und elektrisch in Reihe geschaltet. In diesem Fall ist der Ladungszustand der Elektrolyten in jeweils einer der Halbzellen des Zellstapels gleich. Zur Verteilung der Elektrolyte auf die entsprechenden Halbzellen des Zellstacks und zur gemeinsamen Abführung der Elektrolyte aus den jeweiligen Halbzellen sind Halbzellen untereinander mit Versorgungs- und Entsorgungsleitungen verbunden. Da jede Halbzelle bzw. jeder Zellinnenraum einer Zelle von einem anderen Elektrolyt durchströmt wird, müssen die beiden Elektrolyte während des Durchtritts durch den Zellstack voneinander getrennt werden. Deshalb sind längs des Zellstapels in der Regel zwei separate Versorgungsleitungen und zwei separate Entsorgungsleitungen vorgesehen. Jeder dieser Kanäle wird in der Regel teilweise von den Zellrahmen selbst gebildet, welche dazu vier Bohrungen aufweisen. Die Bohrungen erstrecken sich längs des Zellstacks und bilden hintereinander angeordnet und bedarfsweise über Dichtungsmaterialien voneinander getrennt die Versorgungs- und Entsorgungsleitungen.

Bei einer Vielzahl von elektrochemischen Zellen hat sich gezeigt, dass es zur Steigerung der Leistungsdichte zweckmäßig ist, wenn die Elektroden wenigstens in einer der Halbzellen wenigstens teilweise in den Zellinnenraum eingreifen, porös sind und von dem entsprechenden Elektrolyt durchströmt werden. Allerdings ist die Steigerung der Leistungsdichte oft nicht zufriedenstellend. Dies deutet darauf hin, dass die von der Elektrode zur Verfügung gestellte Oberfläche nicht vollständig oder nicht so effektiv wie möglich genutzt wird. Dies lässt sich durch eine ungleichmäßige Durchströmung der Elektroden erklären, wie sie auch bei der Durchströmung ähnlicher poröser Festkörper beobachtet werden kann. Bereits geringe Ungleichmäßigkeiten in der Porösität führen zu ungleichmäßigen Durchströmungen, da die Druckverluste stark von den entsprechenden freien Strömungsquerschnitten und dem Volumenstrom abhängen.

Daher liegt der vorliegenden Erfindung die Aufgabe zugrunde, den Zellrahmen, die elektrochemische Zelle, den Zellstack und das Verfahren jeweils der eingangs genannten und zuvor näher beschriebenen Art derart auszugestalten und weiterzubilden, dass die Leistungsdichte vergrößert werden kann.

Diese Aufgabe wird bei einem Zellrahmen nach dem Oberbegriff des Anspruchs 1 dadurch gelöst, dass der Zuführkanal wenigstens einen die Einlassöffnung mit der Auslassöffnung wenigstens abschnittsweise verbindenden Transportkanal zum Transportieren des Elektrolyten durch den Zuführkanal in den Zellinnenraum und wenigstens einen Rückführkanal zum teilweisen Zurückführen des zuzuführenden Elektrolyten entgegen der Transportrichtung des zuzuführenden Elektrolyten im Transportkanal aufweist, dass der Rückführkanal über jeweils wenigstens eine in der Transportrichtung des zuzuführenden Elektrolyten voneinander beabstandete Eintrittsöffnung zum Eintreten des zurückzuführenden Elektrolyten und Austrittsöffnung zum Austreten des zurückzuführenden Elektrolyten in fluidem Kontakt mit dem Transportkanal steht.

Die genannte Aufgabe wird auch bei einer elektrochemischen Zelle nach dem Oberbegriff von Anspruch 9 dadurch gelöst, dass wenigstens ein Zellrahmen nach einem der Ansprüche 1 bis 8 ausgebildet ist.

Die genannte Aufgabe wird zudem bei einem Zellstack nach dem Oberbegriff von Anspruch 12 dadurch gelöst, dass die elektrochemischen Zellen nach einem der Ansprüche 9 bis 11 ausgebildet sind.

Ferner wird die zuvor genannte Aufgabe gemäß Anspruch 13 gelöst durch ein Verfahren zum Betrieb einer elektrochemischen Zelle nach einem der Ansprüche 9 bis 11 oder eines Zellstacks nach Anspruch 12,
- bei dem wenigstens einem Zellinnenraum wenigstens eines Zellrahmens wenigstens einer Halbzelle Elektrolyt über einen Zuführkanal zugeführt wird,
- bei dem der Elektrolyt beim Durchströmen des Transportkanals, insbesondere der Strömungskammer, zeitlich abwechselnd wenigstens zwei unterschiedliche Hauptströmungen in Richtung der Auslassöffnung ausbildet und infolge dessen abwechselnd in wenigstens zwei unterschiedlichen Auslassrichtungen aus der Auslassöffnung in den Zellinnenraum strömt.

Die Erfindung hat erkannt, dass es hinsichtlich der Leistungsdichte zweckmäßig ist, wenn der Zuführkanal in wenigstens einen Transportkanal und wenigstens einen Rückführkanal aufgeteilt wird. Dabei erstreckt sich der Transportkanal zwischen einer Einlassöffnung zum Einlassen des zuzuführenden Elektrolyten bis zu einer Auslassöffnung des zuzuführenden Elektrolyten zum Ausströmen des zuzuführenden Elektrolyten in den Zellinnenraum. Dabei können die Einlassöffnungen und die Auslassöffnungen des Zuführkanals und des Transportkanals zusammenfallen. Dies muss aber auch nicht sein. Wenigstens wird es jedoch so sein, dass die Einlassöffnung des Zuführkanals und die Auslassöffnung des Zuführkanals über den Transportkanal wenigstens abschnittsweise miteinander verbunden sind.

Des Weiteren kann es sich anbieten, wenn die Einlassöffnung des wenigstens einen Zuführkanals den Übergang des zuzuführenden Elektrolyten von der Versorgungsleitung in den Zuführkanal definieren und die Auslassöffnung des Zuführkanals den Übergang des Elektrolyten in den Zellinnenraum definieren. Aber auch dies muss nicht so sein. Insbesondere sind Ausgestaltungen eines Zellrahmens denkbar, bei denen nicht mit letzter Sicherheit entschieden werden kann, wo genau die Versorgungsleitung aufhört und der Zuführkanal anfängt bzw. wo genau der Zuführkanal aufhört und der Zellinnenraum anfängt. Dies ist für die vorliegende Erfindung aber auch von untergeordneter Bedeutung, da es weniger um die konkrete Erstreckung des Zuführkanals geht als vielmehr um die Strömung in dem Zuführkanal. Unter einem Zuführkanal kann zudem eine Zuführleitung verstanden werden, wenn der Zuführkanal umfangsseitig vollständig in den Zellrahmen aufgenommen ist. Es kann aber auch ausreichen, wenn der Zuführkanal als offener Kanal in den Zellrahmen eingebracht ist, was die Fertigung des Zellrahmens etwa im Spritzgussverfahren vereinfachen kann. Der Zuführkanal wird dann durch ein sich an die entsprechende Seite des Zellrahmens anschließendes Bauteil zur Bildung einer Zuführleitung verschlossen. Gleiches gilt hier auch für den Transportkanal und den Rückführkanal.

Der Rückführkanal zweigt von dem Transportkanal ab und führt das abgezweigte Elektrolyt zurück in einen Bereich des Transportkanals, der in Strömungsrichtung des Elektrolyten im Transportkanal gesehen vor dem Abzweig in den Rückführkanal vorgesehen ist. Damit wird ein Teil des Elektrolyten zurückgeführt bzw. wird ein Teil des Elektrolyten in dem Zuführkanal im Kreis geführt. Der entsprechend zurückzuführende Elektrolyt tritt von dem Transportkanal in die Eintrittsöffnung des Rückführkanals ein und über die Austrittsöffnung wieder in den Transportkanal des Zuführkanals ein, und zwar in der Transportrichtung vor der Eintrittsöffnung. Der zurückgeführte Elektrolyt wechselwirkt also im Bereich des Austretens aus dem Rückführkanal zurück in den Transportkanal mit dem zuzuführenden, durch den Transportkanal strömenden Elektrolyten.

Diese Wechselwirkung ist beispielsweise abhängig von dem Winkel zwischen dem austretenden zurückgeführten Elektrolyten und dem in diesem Bereich in der Transportrichtung durch den Transportkanal strömenden zuzuführenden Elektrolyten. Dieser Winkel ist zudem durch die Ausgestaltung des Zuführkanals vorzugsweise fest vorgegeben. Die entsprechende Wechselwirkung ist aber auch von dem Volumenstrom und der Geschwindigkeit des wieder in den Transportkanal zurückgeführten Elektrolyten abhängig. Die Strömung des zurückgeführten Elektrolyten kann die Strömung des zuzuführenden Elektrolyten im Transportkanal mithin unterschiedlich stark ablenken, je nachdem wieviel Elektrolyt zurückgeführt wird und/oder mit welcher Geschwindigkeit der zurückgeführte Elektrolyt aus der Austrittsöffnung des Rückführkanals in den Transportkanal einströmt.

Der Zuführkanal kann so ausgebildet werden, dass die Intensität der Wechselwirkung des zurückgeführten Elektrolyten mit dem zuzuführenden Elektrolyten im Bereich der Austrittsöffnung des Rückführkanals einen Einfluss darauf hat, wie viel bzw. welcher Anteil des zuzuführenden Elektrolyten über die wenigstens eine Eintrittsöffnung in den Rückführkanal eintritt, statt der Auslassöffnung des Transportkanals bzw. des Zuführkanals zugeleitet zu werden. Dies ist besonders zweckmäßig, wenn ein großer Volumenstrom des über die Austrittsöffnung des Rückführkanals in den Transportkanal zurückströmenden Elektrolyten die Strömung des Elektrolyten in dem Transportkanal derart beeinflusst, dass in der Folge ein geringerer Volumenstrom an zurückzuführendem Elektrolyt über die Eintrittsöffnung in den Rückführkanal eintritt. Dadurch verringert sich die Beeinflussung der Strömung des zuzuführenden Elektrolyten durch den zurückgeführten Elektrolyten im Bereich der Austrittsöffnung des Rückführkanals, was bei geeigneter Ausgestaltung des Zuführkanals wiederum dazu genutzt werden kann, dass die Strömung des zuzuführenden Elektrolyten in einer Weise durch den Transportkanal strömt, bei der ein größerer Volumenstrom oder Anteil des zuzuführenden Elektrolyten in die Eintrittsöffnung des Rückführkanals eintritt.

Auf diese Weise kann mithin ohne weiteres Zutun erreicht werden, dass sich die Strömung durch den Transportkanal über die Zeit immer wieder ändert und dabei zwischen wenigstens zwei Strömungszuständen hin und her wechselt. Wenn der an den Zellinnenraum grenzende Bereich des Zuführkanals so ausgebildet ist, dass die beiden Strömungszustände dazu führen, dass der zuzuführende Elektrolyt abwechselnd wenigstens im Wesentlichen in unterschiedliche Richtungen und/oder über unterschiedliche Auslassöffnungen in den Zellinnenraum strömt, bildet sich in dem Zellinnenraum dementsprechend auch keine konstante Strömungsverteilung aus. Vielmehr wird es zu einer wenigstens variierenden Strömungsverteilung im Zellinnenraum kommen. Auf diese Weise kann dann verhindert werden, dass sich in dem Zellinnenraum und insbesondere in der Elektrode eine konstante Strömungsverteilung mit nicht oder nur bedingt durchströmten Toträumen ausbildet. Es kann dann eher dazu kommen, dass sich über die Zeit gesehen weniger oder kleinere Toträume ausbilden und/oder dass sich die Lage der Toträume über die Zeit gesehen verändern. So wird letztlich erreicht, dass die von der Elektrode bereitgestellte innere Oberfläche für die elektrochemischen Reaktionen effektiver genutzt werden kann.

In diesem Zusammenhang kann bei der Ausgestaltung des Zuführkanals, insbesondere des Transportkanals, das strömungstechnische Grundprinzip genutzt werden, dass eine Erweiterung des freien Strömungsquerschnitts in dem Zuführkanal zur Ausbildung eines Strahls an in den Bereich der Erweiterung einströmenden Elektrolyten führt, der das Bestreben hat, sich an eine Seite der Wandung des Transportkanals anzulegen. Im Bereich dieser Seite der Wandung herrscht dabei eine höhere Strömungsgeschwindigkeit als an der gegenüberliegenden Seite der Wandung. Je nachdem wie sehr der zurückgeführte Elektrolyt die Strömung in diesem Bereich beeinflusst, legt sich die Strömung an unterschiedliche Seiten der Wandung an. Über eine längere Strecke würde die Strömung bzw. würden deren Strömungsgeschwindigkeiten aufgrund von Reibungseffekten wieder gleichmäßiger werden. Der Zuführkanal bzw. der Transportkanal sollte daher nicht zu lang ausgebildet werden aber dennoch lang genug sein, dass sich die Strömung an unterschiedlichen Seiten der Wandung anlegen kann, wozu es einer gewissen Strecke der Strömung bedarf.

Besonders zweckmäßig lassen sich entsprechende Zellrahmen einsetzen, wenn diese einen Teil einer elektrochemischen Zelle oder gar einen Teil eines entsprechenden Zellstacks bilden. Hier werden die entsprechenden, zuvor bereits genannten Vorteile erzielt, die im Zusammenhang mit einer elektrochemischen Zelle oder mit einem Zellstack, insbesondere einer Redox-Flow-Batterie, besonders gewinnbringend eingesetzt werden können. Eine entsprechende elektrochemische Zelle weist bevorzugt zwei Zellinnenräume auf. Es können in besonderen Fällen aber auch drei und mehr Zellinnenräume vorgesehen sein. Dabei können die einzelnen Zellinnenräume bedarfsweise bevorzugt durch semipermeable Membranen voneinander getrennt sein. Ferner kann im Falle einer ungeraden Anzahl von Zellinnenräumen ein mittlerer Zellinnenraum als eine Art Mischzellinnenraum ausgebildet sein, dessen eine Hälfte zur einen Halbzelle der elektrochemischen Zelle und deren andere Hälfte zur anderen Halbzelle der elektrochemischen Zelle gehört.

Verfahrensmäßig erlauben die zuvor beschriebenen Zellrahmen ein zweckmäßiges Zuführen von Elektrolyt in den Zellinnenraum des Zellrahmens wenigstens einer Halbzelle über wenigstens einen Zuführkanal. Wenn der Elektrolyt den Zuführkanal durchströmt, passiert er dabei einen Transportkanal, vorzugsweise eine Strömungskammer, eines Transportkanals. Dabei kann der zuzuführende Elektrolyt wenigstens zwei unterschiedliche Hauptströmungen ausbilden. Unter einer Hauptströmung ist dabei der Teil der Strömung zu verstehen, der flächenspezifisch den höchsten Durchfluss aufweist. In den Bereichen des Zuführkanals, die ungleichmäßig durchströmt werden, existieren zu den Zeiten der ungleichmäßigen Durchströmung stärker durchströmte und schwächer durchströmte Abschnitte. Die stärker durchströmten Abschnitte bilden dabei die Hauptströmung aus, während die schwächer durchströmten Bereiche sehr viel weniger zum Volumenstrom der Strömung des Elektrolyten beitragen. Würde die Strömung durch die entsprechenden Bereiche durch Stromlinien dargestellt, so würden die Stromlinien entlang der Hauptströmung eng aneinander liegen, während die Stromlinien in den Bereichen außerhalb der Hauptströmung deutlichen weiter voneinander beabstandet wären. In der Hauptströmung würden die Stromlinien zumindest im Ansatz oder wenigstens im Wesentlichen parallel zueinander verlaufen, während die Stromlinien außerhalb der Hauptströmung unabhängig voneinander verlaufen können. Dies kann beispielsweise dann der Fall sein, wenn in den Bereichen außerhalb der Hauptströmung eine nennenswerte Verwirbelung des Elektrolyten auftreten würde, was in der Hauptströmung nicht oder wenigstens deutlich weniger der Fall sein sollte.

Die Hauptströmung ist dabei zeitlich nicht konstant, sondern zu unterschiedlichen Zeitpunkten können wenigstens zwei unterschiedliche Hauptströmungen beobachtet werden. Zudem wechseln sich die Zeiten der einen Hauptströmung und die Zeiten der anderen Hauptströmung ab. Jede der Hauptströmungen ist dabei aber in Richtung der Auslassöffnung gerichtet, da der Hauptanteil des in das Zellinnere zugeführten Elektrolyten jeweils über die Hauptströmung in den Zellinnenraum zugeführt wird. In dem Maße, wie die Hauptströmungen einander abwechseln, wechseln sich auch die Strömungsrichtungen ab, in denen die Hauptströmung über die Auslassöffnung in den Zellinnenraum des Zellrahmens einströmt. Mithin verändert sich immer wieder oder bedarfsweise auch stetig die Strömung des in den Zelleninnenraum einströmenden Elektrolyten und vorzugsweise auch die Strömung des Elektrolyten durch den Zellinnenraum bzw. durch die darin wenigstens teilweise vorgesehene Elektrode.

Bei einem ersten besonders bevorzugten Zellrahmen weist der Transportkanal wenigstens abschnittsweise zwischen der wenigstens einen Eintrittsöffnung und der wenigstens einen Austrittsöffnung jeweils des Rückführkanals eine Strömungskammer in einer Weise auf, die dazu führt, dass der zuzuführende Elektrolyt abwechselnd in wenigstens zwei unterschiedlichen Hauptströmungen in Richtung der Auslassöffnung durch die Strömungskammer strömt und als Folge dessen in wenigstens zwei unterschiedlichen Auslassrichtungen aus der Auslassöffnung in den Zellinnenraum strömt. Dadurch kann eine variierende Strömung des Elektrolyten in den Zellinnenraum und damit eine höhere Leistungsdichte erreicht werden. Dabei ist es besonders bevorzugt, wenn die Strömungskammer so ausgebildet ist, dass die Hauptströmungen einander in einer wenigstens im Wesentlichen konstanten Frequenz abwechseln. Dies macht die Strömungsverhältnisse vorhersagbarer, was eine Steigerung der Leistungsdichte einfacher und zuverlässiger bereitstellen lässt. Noch zweckmäßiger kann es sein, wenn die Strömungskammer derart ausgestaltet wird, dass die Frequenz mit zunehmendem Volumenstrom durch den Transportkanal, wenigstens im Wesentlichen linear, ansteigt. Je größer der Volumenstrom ist, umso höher ist die Gefahr, dass sich eine ungleichmäßige Strömung mit erheblichen Totzonen ausbildet. Deswegen ist es umso wichtiger, wenn die Frequenz, mit der die Strömungsrichtung des Elektrolyten aus dem Zuführkanal in den Zellinnenraum hinein variiert, zunimmt.

Alternativ oder zusätzlich kann der Transportkanal wenigstens abschnittsweise zwischen der wenigstens einen Eintrittsöffnung und der wenigstens einen Austrittsöffnung jeweils des Rückführkanals eine Strömungskammer derart aufweisen, dass die Strömungskammer wenigstens abschnittsweise einen freien Strömungsquerschnitt mit einer Querschnittsfläche bildet, die wenigstens dem 2-fachen, vorzugsweise wenigstens dem 2,5-fachen, insbesondere wenigstens dem 3-fachen, der Querschnittsfläche des freien Strömungsquerschnitts der Einlassöffnung und/oder der Auslassöffnung des Zuführkanals und/oder das Transportkanals entspricht. Auf diese Weise kann der zuzuführende Elektrolyt nach Art eines Freistrahls in den größeren Querschnitt der Strömungskammer eintreten und sich je nach den Strömungsverhältnissen beispielsweise eher an eine Seite der Wandung der Strömungskammer oder eher an eine andere Seite der Wandung der Strömungskammer anlegen. So können einander abwechselnde Hauptströmungen in der Strömungskammer ausgebildet werden, die einerseits zu sich abwechselnden Hauptströmungen und zu sich abwechselnden Richtungen führen, mit der der zuzuführende Elektrolyt aus dem Zuführkanal in den Zellinnenraum geleitet wird.

Wenn die Querschnittsfläche des freien Strömungsquerschnitts der Auslassöffnung des Zuführkanals größer ist als die Querschnittfläche des freien Strömungsquerschnitts der Auslassöffnung der Strömungskammer, kann eine Erweiterung des Zuführkanals am Ende des Zuführkanals bereitgestellt werden, die es ihrerseits auf einfache Weise erlaubt, den Elektrolyten ohne zusätzliche bewegliche Teile in unterschiedlichen Richtungen in den Zellinnenraum ausströmen zu lassen. Dies ist in besonderem Maße der Fall, wenn sich der Transportkanal in diesem Bereich trichterförmig erweitert, wobei diese Erweiterung zur Vereinfachung des Zuführkanals vorzugsweise direkt nach der Strömungskammer in der Transportrichtung des zuzuführenden Elektrolyten vorgesehen sein kann. Ebenso ist es konstruktiv einfach, wenn der Transportkanal in die Auslassöffnung des Zuführkanals übergehend erweitert vorgesehen ist.

Besonders einfach und zuverlässig lässt sich ein Umschlagen der Strömung des zuzuführenden Elektrolyten in wenigstens zwei unterschiedliche Hauptströmungen erreichen, wenn der Zuführkanal wenigstens zwei Rückführkanäle zum teilweisen Zurückführen des zuzuführenden Elektrolyten entgegen der Transportrichtung des zuzuführenden Elektrolyten im Transportkanal aufweist. So kann über beide Rückführkanäle nacheinander auf die Umlenkung der Hauptströmung im Bereich der Austrittsöffnungen der Rückführleitungen Einfluss genommen werden. Der Einfachheit und der Zuverlässigkeit des Zuführkanals halber bietet es sich an, wenn die Rückführkanäle auf einander gegenüberliegenden Seiten des Transportkanals angeordnet sind. Zudem kann eine einfach und zielgerichtete Rückführung des Elektrolyten insbesondere dann erreicht werden, wenn die Rückführkanäle untereinander unverbunden sind.

Um eine möglichst gleichmäßige Durchströmung des Zellinnenraums, insbesondere der dort vorgesehenen Elektrode, zu erreichen, kann es sinnvoll sein, wenigstens zwei, vorzugsweise wenigstens vier, insbesondere wenigstens sechs Zuführkanäle pro Zellrahmen vorzusehen. Aus demselben Grund bietet es sich an, die Zuführkanäle auf derselben Seiten des Zellrahmens vorzusehen. Unabhängig davon können die Zuführkanäle bevorzugt untereinander unverbunden vorgesehen sein, um eine gegenseitige Beeinflussung zu vermeiden. Trotzdem können die verschiedenen Zuführkanäle aber eintrittsseitig mit einer gemeinsamen Versorgungsleitung verbunden sein, wodurch sich eine verhältnismäßig einfache und dennoch funktionale Ausgestaltung des Zellrahmens ergeben kann. Im Übrigen sind die Zuführkanäle dann vorzugsweise durchgängig parallel und separat voneinander vorgesehen.

Die zuvor bereits beschriebenen Vorteile des entsprechenden Zellrahmens kommen dann in besonderem Maße zur Steigerung der Leistungsdichte von elektrochemischen Zellen zum Tragen, wenn im Zellinnenraum ein den Zellinnenraum vorzugsweise wenigstens im Wesentlichen vollständig auffüllendes Füllelement mit einer offenporigen Struktur vorgesehen ist. Um eine gute Durchströmung der offenporigen Struktur und zugleich eine gute volumenspezifische Reaktivität zu erreichen, kann es sich weiter anbieten, wenn das Füllelement einteilig, filzartig, aus Graphit und/oder als Elektrode ausgebildet ist.

Unabhängig davon kann bedarfsweise für eine gleichmäßigere Durchströmung des Zellinnenraums dadurch gesorgt werden, dass die Auslasskanäle und/oder die Zuführkanäle wenigstens eines Zellrahmens wenigstens im Wesentlichen gleichmäßig über eine Seite des wenigstens einen Zellrahmens verteilt angeordnet sind. So kann letztlich der zur Verfügung stehende freie Strömungsquerschnitt besser genutzt werden und so eine höhere Leistungsdichte erreicht werden.

Bei einer ersten besonders bevorzugten elektrochemischen Zelle ist der wenigstens eine Zellinnenraum umfangseitig durch den Zellrahmen, zu einer Seite durch die semipermeable Membran und zur gegenüberliegenden Seite durch eine Elektrode oder eine bipolare Platte begrenzt. Auf diese Weise kann ein einfacher und kostengünstiger Aufbau der elektrochemischen Zelle erreicht werden, der zudem in hohem Maße funktional ist. Alternativ oder zusätzlich können der Zellinnenraum und der Zellrahmen umlaufend in einer Rahmenebene angeordnet sein. Auch dies vereinfacht den Aufbau der elektrochemischen Zelle, und zwar insbesondere dann, wenn viele elektrochemische Zellen zu einem Zellstack zusammengefasst werden sollen.

Wenn der Zuführkanal, der Transportkanal und/oder der Rückführkanal wenigstens im Wesentlichen parallel zur Rahmenebene ausgerichtet ist, kann konstruktiv einfach für eine geeignete Leitung des Elektrolyten in den Zellinnenraum gesorgt werden. Dies kann in besonderem Maße der Fall sein, wenn der Zuführkanal, der Transportkanal und/oder der Rückführkanal über ihre gesamte Längserstreckung in der Rahmenebene angeordnet sind.

Bei einem ersten besonders bevorzugten Verfahren schlägt die Strömung des Elektrolyten beim Durchströmen des Transportkanals, insbesondere beim Durchströmen der Strömungskammer, zeitlich abwechselnd zwischen den wenigstens zwei Hauptströmungen um. Das Umschlagen ist hier insbesondere als automatischer bzw. zwangsweiser Wechsel zwischen den Hauptströmungen beim Betrieb des Zuführkanals zu verstehen. Dabei ist es nicht zwingend von Bedeutung, wie schnell oder plötzlich der Wechsel zwischen den Hauptströmungen eintritt. Weiter bevorzugt ist es jedoch, wenn das Umschlagen der Strömung abwechselnd in die wenigstens zwei Hauptströmungen mit konstanter Frequenz erfolgt. Dann kann nämlich grundsätzlich eine gleichmäßigere und damit effizientere Durchströmung des Zellinnenraums erreicht werden. Darüber hinaus kann es sich anbieten, wenn die Frequenz des Umschlagens der Strömung des zuzuführenden Elektrolyten in die wenigstens zwei Hauptströmungen wenigstens im Wesentlichen proportional zum Volumenstrom des zuzuführenden Elektrolyten ist. Dann wird bei sich steigerndem Volumenstrom für eine zeitlich schnelle Vergleichmäßigung der Strömung des Elektrolyten in den Zellinnenraum hinein gesorgt. Dies ist bevorzugt, weil die Strömungsunterschiede beim Durchströmen des Zellinnenraums ansonsten mit zunehmendem Volumenstrom größer werden würden.

Eine gleichmäßige Strömung des Elektrolyten durch den Zellinnenraum kann auch dadurch erreicht werden, dass die wenigstens zwei Hauptströmungen gegenüberliegenden Seiten der Strömungskammer und bedarfsweise auch gegenüberliegenden Rückführkanälen zugeordnet sind. Dann können die gewünschten Strömungsverhältnisse einfacher eingestellt und zuverlässiger aufrechterhalten werden. Um die Zellinnenräume in konstruktiv einfacher Weise mit einem größeren Volumenstrom an Elektrolyt zu versorgen, kann es sich anbieten, das zuzuführende Elektrolyt von wenigstens einer gemeinsamen Versorgungsleitung auf mehrere Zuführkanäle wenigstens eines Zellrahmens aufzuteilen und parallel über die Zuführkanäle dem Zellinnenraum zuzuführen.

Nachfolgend wird die Erfindung anhand einer lediglich ein Ausführungsbeispiel darstellenden Zeichnung näher erläutert. In der Zeichnung zeigt
- Fig. 1A-B: einen erfindungsgemäßen Zellstack in Form einer Redox-Flow-Batterie in einem Längsschnitt,
- Fig. 2: eine Draufsicht auf einen erfindungsgemäßen Zellrahmen des Zellstacks aus Fig. 1,
- Fig. 3: ein Detail des Zellrahmens aus Fig. 3 und
- Fig. 4A-D: das Detail des Zellrahmens aus Fig. 3 zu unterschiedlichen Zeiten während des Betriebs einer erfindungsgemäßen elektrochemischen Zelle umfassend den Zellrahmen aus Fig. 2.

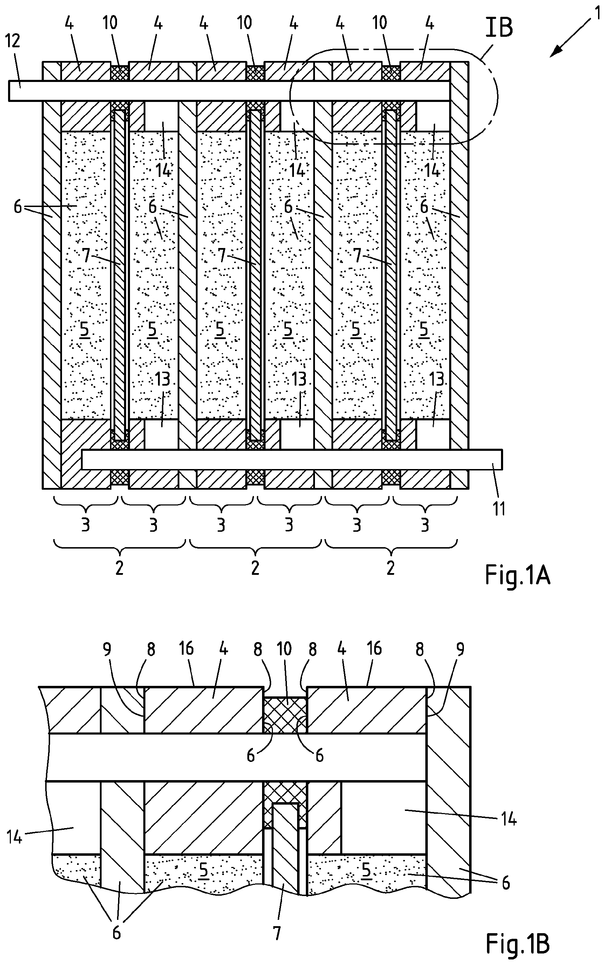

In den Fig. 1A und 1B ist ein Zellstack 1, also ein Zellstapel einer elektrochemischen Zelle, insbesondere in From einer Redox-Flow-Batterie, in einem Längsschnitt dargestellt. Der Zellstack 1 umfasst drei Zellen 2, die jeweils zwei Halbzellen 3 mit korrespondierenden Elektrolyten aufweisen. Jede Halbzelle 3 weist einen Zellrahmen 4 auf, der einen Zellinnenraum 5 umfasst, durch den ein in einem Vorlagebehälter bevorrateter Elektrolyt hindurchgeleitet werden kann und in den wenigstens teilweise eine Elektrode 6 eingreift, die den Zellinnenraum 5 zudem zu einer Seite abschließt und verschließt. Die durch die Zellinnenräume 5 strömenden Elektrolyte unterscheiden einander. Der jeweilige Zellinnenraum 5 ist auf der von der Elektrode 6 abgewandten Seite angrenzend zum Zellrahmen 4 der zweiten Halbzelle 3 derselben elektrochemischen Zelle 2 durch eine zwischen den Zellrahmen 4 der beiden Halbzellen 3 vorgesehene, semipermeable Membran 7 verschlossen. Ein konvektives Übertreten der beiden unterschiedlichen Elektrolyte der beiden Halbzellen 3 in den Zellinnenraum 5 des Zellrahmens 4 der anderen Halbzelle 3 wird so verhindert. Über die semipermeable Membran 7 können jedoch Ionen per Diffusion von einem Elektrolyten auf den anderen Elektrolyten übergehen, wodurch ein Ladungstransport erfolgt. Durch Redox-Reaktionen der Redox-Paare der Elektrolyte an den Elektroden 6 der Halbzellen 3 einer Zelle 2 werden entweder Elektronen freigesetzt oder aufgenommen. Die freigesetzten Elektronen können über eine außerhalb der Redox-Flow-Batterie vorgesehene, bedarfsweise einen elektrischen Verbraucher aufweisende, elektrische Verbindung von einer Elektrode 6 zur anderen Elektrode 6 einer Zelle 2 fließen. An welcher Elektrode 6 welche Reaktionen ablaufen, hängt davon ab, ob die Redox-Flow-Batterie geladen oder entladen wird.

Die Elektroden 6 liegen bei dem dargestellten Zellstack 1 flächig auf einer Außenseite 8 des Zellrahmens 4 auf. Die Elektrode 6 bildet also im Anlagebereich mit der Außenseite 8 des Zellrahmens 4 eine Rahmenfläche, die als Dichtfläche 9 wirkt. Zwischen den einander zugewandten Außenseiten 8 der Zellrahmen 4 einer Zelle 2 befindet sich ein Dichtmaterial 10, in dem die Membran 7 dichtend aufgenommen ist. Das Dichtmaterial 10 liegt flächig an den Außenseiten 8 der angrenzenden Zellrahmen 4 an und bildet so Rahmenflächen, die als Dichtflächen 9 wirken.

Längs zum Zellstack 1 erstrecken sich bei der dargestellten Redox-Flow-Batterie vier Kanäle. Zwei davon sind Versorgungsleitungen 11 zur Zuführung der beiden Elektrolyte zu den Zellinnenräumen 5 der Zellrahmen 4. Die zwei anderen Kanäle sind Entsorgungsleitungen 12 zum Abführen der Elektrolyte aus den Zellinnenräumen 5 der Zellrahmen 4. In der Fig. 1A ist jeweils eine Versorgungsleitung 11 und eine Entsorgungsleitung 12 dargestellt. Von der Versorgungsleitung 11 zweigen in jeweils einer Halbzelle 3 jeder Zelle 2 Zuführkanäle 13 ab, über die der Elektrolyt dem entsprechenden Zellinnenraum 5 der Halbzelle 3 zugeführt werden kann. An gegenüberliegenden Abschnitten der entsprechenden Zellrahmen 4 sind Abführkanäle 14 vorgesehen, über die der Elektrolyt aus den Zellinnenräumen 5 in die Entsorgungsleitung 12 abgeleitet werden kann. Die nicht in der Fig. 1A dargestellte Versorgungsleitung 11 und ebenfalls nicht dargestellte Entsorgungsleitung 12 ermöglichen dem zweiten Elektrolyt, über gleichartige Zuführkanäle 13 und Abführkanäle 14 durch die jeweils anderen Zellinnenräume 5 der anderen Halbzellen 3 zu strömen.

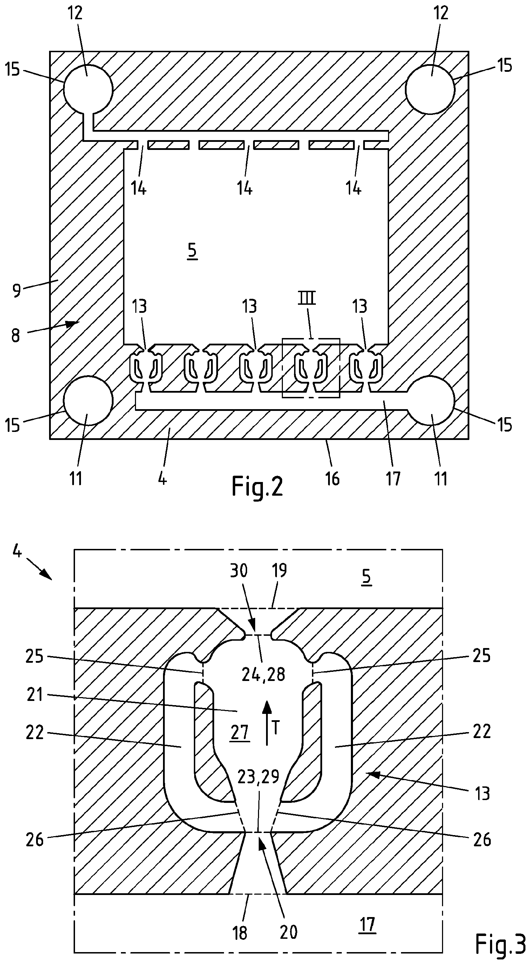

In der Fig. 2 ist eine Draufsicht auf einen Zellrahmen 4 dargestellt. In den Ecken des Zellrahmens 4 sind vier Bohrungen 15 vorgesehen, von denen jede Bohrung 15 ein Teil einer Versorgungsleitung 11 oder einer Entsorgungsleitung 12 bildet. Die Zuführkanäle 13 und Abführkanäle 14 sind als Vertiefungen oder offene Kanäle in die dargestellte Außenseite 8 des um den Zellinnenraum 5 umlaufenden Rahmenmantels 16 des Zellrahmens 4 eingelassen. Die Zuführkanäle 13 und Abführkanäle 14 werden beim Zusammenbau zu einem Zellstack 1 zu umfangsseitig geschlossenen Leitungen geschlossen. Dies erfolgt bei dem dargestellten Zellstack 1 beispielsweise durch die Dichtungsmaterialien 10 und die Elektroden 6. Die Elektroden 6 könnten von den Versorgungsleitungen 11 und den Entsorgungsleitungen 12 aber auch durch Dichtungsmaterialien 10 und/oder der elektrischen Isolation diesen Materialien räumlich getrennt sein. Alternativ oder zusätzlich könnte auch auf das Dichtmaterial 10 angrenzend an die semipermeable Membran 7, die Zuführkanäle 13 und die Abführkanäle 14 verzichtet werden.

Die Abführkanäle 14 sind bei dem dargestellten Ausführungsbeispiel untereinander verbunden, um den Elektrolyten gesammelt zur Entsorgungsleitung 12 zu leiten. Dies ist jedoch nicht erforderlich. Auch die Zuführkanäle 13 können alle separat voneinander von der Versorgungsleitung 11 abgehen. Bei dem dargestellten Ausführungsbeispiel eines Zellrahmens 4 sind jedoch Verzweigungen vorgesehen, um den über die Versorgungsleitung 11 zugeführten Elektrolyt schrittweise auf die Zuführkanäle 13 aufzuteilen. Damit der Druckabfall über die Zuführkanäle 13 und damit die Durchströmung der Zuführkanäle 13 möglichst gleichmäßig erfolgt, wird der Elektrolyt über eine Sammelleitung 17 mit einem großen freien Querschnitt zu den Zuführkanälen 13 zugeführt. Der Druckverlust der Strömung des dem Zellinnenraum 5 zuzuführenden Elektrolyten wird damit wenigstens im Wesentlichen durch den Druckverlust über die Zuführkanäle 13 bestimmt. Bei dem dargestellten Ausführungsbeispiel eines Zellrahmens 4 sind die Zuführkanäle 13 abweichend zu den Abführkanälen 14 ausgebildet.

Einer der gleichartig ausgebildeten Zuführkanäle 13 des Zellrahmens 4 der Fig. 2 ist in der Fig. 3 dargestellt. Der dargestellte Zuführkanal 13 weist eine Einlassöffnung 18 und eine Auslassöffnung 19 auf. Die Positionen der Einlassöffnung 18 und der Auslassöffnung 19 können bei dem dargestellten Zuführkanal 13 so festgelegt werden, damit die Auslassöffnung 19 den direkten Übergang vom Zuführkanal 13 zum Zellinnenraum 5 definiert und dass die Einlassöffnung 18 am Beginn einer Erweiterung des freien Strömungsquerschnitts angeordnet ist. Bei dem dargestellten Zuführkanal 13 kann die Einlassöffnung 18 entsprechend an einer Engstelle 20 des freien Strömungsquerschnitts für den Elektrolyten angenommen werden. Es ist aber grundsätzlich nicht erforderlich, dass eine entsprechende Engstelle 20 existiert, an der ein sich verengender, freier Strömungsquerschnitt in einen sich erweiternden, freien Strömungsquerschnitt übergeht. Bei dem dargestellten Zuführkanal 13 ist die Einlassöffnung 18 für den dem Zelleninnenraum 5 zuzuführenden Elektrolyten zudem kurz vor oder angrenzend an einen Bereich des Zuführkanals 13 vorgesehen, in dem ein Transortkanal 21 und zwei Rückführkanäle 22 miteinander verbunden sind. Dabei dient der Transportkanal 21 dazu, den zuzuführenden Elektrolyten zum Zellinnenraum 5 zu transportieren. Mithin verbindet der Transportkanal 21 wenigstens abschnittsweise die Einlassöffnung 18 und die Auslassöffnung 19 des Zuführkanals 13 miteinander.

Dabei kann die Einlassöffnung 23 des Transportkanals 21 mit der Einlassöffnung 18 des Zuführkanals 13 zusammenfallen, wie dies bei dem dargestellten Zuführkanal 13 vermerkt ist, oder die Einlassöffnung 23 des Transportkanals 21 ist in der Transportrichtung T des zuzuführenden Elektrolyten in Richtung des Zellinnenraums 5 von der Einlassöffnung 18 des Zuführkanals 13 beabstandet. Eine entgegengesetzte Beabstandung der Einlassöffnungen 18, 23 ist jedoch grundsätzlich nicht vorgesehen. Analog kann die Auslassöffnung 24 des Transportkanals 21 mit der Auslassöffnung 19 des Zuführkanals 13 zusammenfallen oder aber in der Transportrichtung T des zuzuführenden Elektrolyten in Richtung des Zellinnenraums 5 vor der Auslassöffnung 19 des Zuführkanals 13 angeordnet sein.

Neben dem Transportkanal 21 umfasst der dargestellte und insoweit bevorzugte Zuführkanal 13 noch zwei Rückführkanäle 22, die an gegenüberliegenden Seiten des Transportkanals 21 angeordnet sind und über die ein Teil des zuzuführenden Elektrolyten zurückgeführt wird, anstatt dem Zellinnenraum 5 zugeführt zu werden. Aus dem Transportkanal 21 tritt der zurückzuführende Elektrolyt über die Eintrittsöffnungen 25 in die Rückführkanäle 22 ein, um entlang der Rückführkanäle 22 entgegen der Transportrichtung T des Elektrolyten im Transportkanal 21 zurückgeführt zu werden, um dann über Austrittsöffnungen 26 wieder in den Transportkanal 21 zurückzugelangen.

Der Transportkanal 21 umfasst eine Strömungskammer 27, die wenigstens abschnittsweise zwischen den Austrittsöffnungen 26 und den Eintrittsöffnungen 25 der Rückführkanäle 22 angeordnet ist. Die Strömungskammer 27 weist dabei vergleichsweise zu der Einlassöffnung 18 des Zuführkanals 13 und/oder der Einlassöffnung 23 des Transportkanals 21 eine größere Querschnittsfläche des freien Strömungsquerschnitts auf. Dadurch können sich in der Strömungskammer 27 signifikant unterschiedliche Strömungszustände ausbilden. Bei dem dargestellten und insoweit bevorzugten Zuführkanal 13 ist die Querschnittsfläche des freien Strömungsquerschnitts der Auslassöffnung 19 des Zuführkanals 13 größer als die Querschnittsfläche des freien Strömungsquerschnitts der Auslassöffnung 28 der Strömungskammer 27, so dass sich der Zuführkanal 13 nach der Strömungskammer 27 in der Richtung des Zellinnenraums 5 erweitert und so ermöglicht, dass der dem Zellinnenraum 5 zuzuführende Elektrolyt in unterschiedliche Richtungen in den Zellinnenraum 5 strömen kann. Dies wird auch dadurch begünstigt, dass der Zuführkanal 13 angrenzend an die entsprechende Erweiterung des freien Strömungsquerschnitts in den Zellinnenraum 5 übergeht. Da der Transportkanal 21 oder der Zuführkanal 13 sich direkt nach der Strömungskammer 27 in der Transportrichtung T des zuzuführenden Elektrolyten trichterförmig erweitert, ist der Zuführkanal 13 in bevorzugter Weise verhältnismäßig kurz ausgebildet.

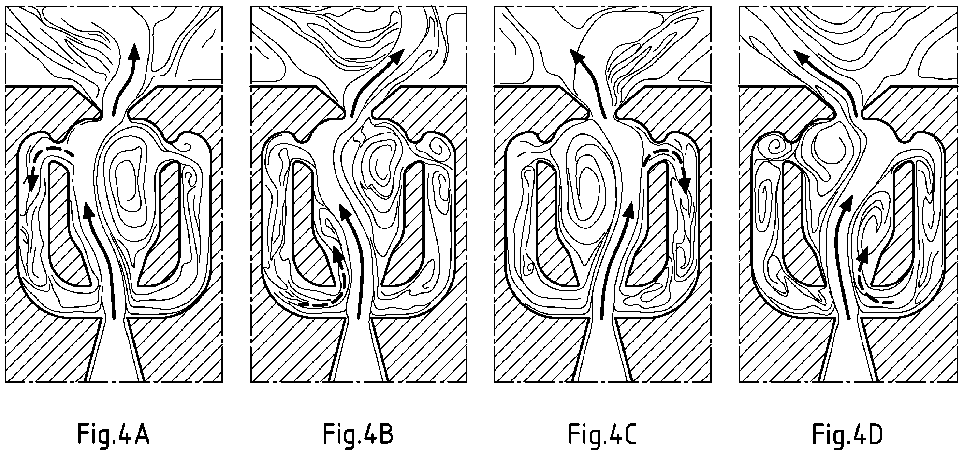

In den Fig. 4A-D ist der Zuführkanal 13 mit zuzuführendem Elektrolyt durchströmt dargestellt, und zwar zu unterschiedlichen Zeitpunkten. Zunächst werden die grundsätzlichen Strömungsverhältnisse in dem Zuführkanal 13 anhand der Fig. 4A beschrieben, wobei im Folgenden der besseren Anschaulichkeit halber auf die Bezugszeichen der Fig. 3 Bezug genommen wird. Der zuzuführende Elektrolyt strömt über die Einlassöffnung 18 in den Zuführkanal 13 ein und gelangt danach in die Strömungskammer 27 des Transportkanals 21, in dem die Querschnittsfläche des freien Strömungsquerschnitts etwa dem Dreifachen oder dem Vierfachen der Querschnittsfläche im Bereich der Einlassöffnung 23,29 des Transportkanals 21 bzw. der Strömungskammer 27 entspricht. Mithin bildet sich nach der Einlassöffnung 23, im Bereich der Strömungskammer 27 eine Art Freistrahl in die Strömungskammer 27 hinein aus. Mithin wird die Strömungskammer 27 nicht gleichmäßig durchströmt, sondern es bildet sich eine Hauptströmung aus, die wenigstens den Großteil des Volumenstroms des zuzuführenden Elektrolyten umfasst. Außerhalb der Hauptströmung in der Strömungskammer 27 des Transportkanals 21 ist die Strömungsgeschwindigkeit dagegen deutlich geringer, weshalb hier auch deutlich weniger Elektrolyt strömt. Zudem wird der Anteil des dort strömenden Elektrolyten auch noch zu einem großen Teil verwirbelt.

Aus grundsätzlichen strömungsdynamischen Prinzipien wird die Strömung des Elektrolyten, die nach Art eines Freistrahls in die Strömungskammer 27 eintritt, geneigt sein, sich an die Wandung der Strömungskammer 27 anzulegen. Gemäß der Darstellung der Fig. 4A hat sich hier die Hauptströmung des Elektrolyten in der Strömungskammer 27 an die linke Seite der Strömungskammer 27 angelegt und erstreckt sich auf dieser Seite in Richtung des dem Zellinnenraum 5 zugeordneten Ende der Strömungskammer 27 und damit in Richtung der Auslassöffnungen 19,24 des Transportkanals 21 und des Zuführkanals 13 als solchem. Da die Hauptströmung entlang der linken Seite der Strömungskammer 27 strömt, gelangt die Hauptströmung in einem gewissen Winkel in Richtung des Endes der Strömungskammer 27 im Bereich einer Engstelle 30. An der Engstelle 30 bzw. der Verjüngung der Strömungskammer 27 ist die Querschnittsfläche des freien Strömungsquerschnitts etwa dreifach oder vierfach geringer als in einem mittleren Abschnitt der Strömungskammer 27. Nach dem Ende der Strömungskammer 27 bzw. der Engstelle 30 weitet sich der Transportkanal 21 bzw. der Zuführkanal 13 auf, so dass der freie Strömungsquerschnitt größer wird. Aus diesem Grund kann die Hauptströmung des Elektrolyten aus der Strömungskammer 27 auch in einem ähnlichen Winkel aus der Auslassöffnung 19,24 des Transportkanals 21 bzw. des Zuführkanals 13 in den Zellinnenraum 5 ausströmen, in dem die Hauptströmung in die Engstelle 30 hineinströmt.

Ein Teil der Hauptströmung des Elektrolyten gelangt aber nicht durch die Engstelle 30 hindurch, sondern wird durch eine in der Transportrichtung T des Elektrolyten vor dem Ende der Strömungskammer 27 angeordneten Eintrittsöffnung 25 in die Rückführkanäle 22 gedrückt. Entlang der Rückführkanäle 22 wird der zurückzuführende Elektrolyt entgegen der Transportrichtung T des Elektrolyten in der Strömungskammer 27 zurückgeführt und durch die Austrittsöffnungen 26 im Bereich des Anfangs der Strömungskammer 27 bzw. den Anfang des Transportkanals 21 zurück in die Strömungskammer 27 bzw. den Transportkanal 21 geleitet. Dort wechselwirkt der zurückgeführte Elektrolyt mit dem in die Strömungskammer 27 hineingerichteten Freistrahl des zuzuführenden Elektrolyten.

In dem in der Fig. 4A dargestellten Fall wird über die beiden Rückführkanäle 22 nicht der gleiche Volumenstrom an Elektrolyt zurückgeführt. Da die Hauptströmung des Elektrolyten entlang der linken Seite der Strömungskammer 27 strömt, wird auch viel mehr Elektrolyt in den linken Rückführkanal 22 gedrückt als in den gegenüberliegenden rechten Rückführkanal 22. Infolgedessen strömt auch viel mehr Elektrolyt aus der Austrittsöffnung des linken Rückführkanals 22 aus. Da der zurückgeführte Elektrolyt bei dem dargestellten und insoweit bevorzugten Zuführkanal 13 etwa rechtwinklig aus den Austrittsöffnungen 26 in Bezug auf die Ursprungsrichtung des Freistrahls austritt, wird der Freistrahl durch den zurückgeführten Elektrolyten nach rechts zur dortigen Wandung der Strömungskammer 27 umgelenkt, wie dies in der Abfolge der Fig. 4B dargestellt ist. Die Hauptströmung des zuzuführenden Elektrolyten schlägt mithin nach einer gewissen Zeit um und strömt danach entlang der rechten Seite der Strömungskammer 27 in Richtung des Zellinnenraums 5.

Dies ist in der Fig. 4C dargestellt. Die Hauptströmung strömt dann in einen entgegengesetzten Winkel in die Engstelle 30 am Ende der Strömungskammer 27 und aufgrund der Ausgestaltung des Zuführkanals 13 auch in einem ähnlichen Winkel aus dem Zuführkanal 13 aus sowie in den Zellinnenraum 5 hinein. Durch die Verlagerung der Hauptströmung in der Strömungskammer 27 wird aber auch mehr Elektrolyt über den rechten Rückführkanal 22 zurückgeführt als über den linken Rückführkanal 22, so dass der aus der rechten Austrittsöffnung 26 des rechten Rückführkanals 22 austretende, zurückgeführte Elektrolyt den Freistrahl in diesem Bereich erneut nach links drückt, wie dies in der Fig. 4D dargestellt ist. Infolgedessen schlägt die Hauptströmung des zuzuführenden Elektrolyten wieder zurück nach links um, so dass der zuvor beschriebene Zyklus erneut abläuft. Die Zykluszeit und damit die entsprechende Frequenz bleibt dabei wenigstens im Wesentlichen konstant, wenn der Volumenstrom des zuzuführenden Elektrolyten ebenfalls wenigstens im Wesentlichen konstant ist.

### Bezugszeichenliste

- 1: Zellstack
- 2: Zelle
- 3: Halbzelle
- 4: Zellrahmen
- 5: Zellinnenraum
- 6: Elektrode
- 7: semipermeable Membran
- 8: Außenseite
- 9: Dichtfläche
- 10: Dichtmaterial
- 11: Versorgungsleitung
- 12: Entsorgungsleitung
- 13: Zuführkanal
- 14: Abführkanal
- 15: Bohrungen
- 16: Rahmenmantel
- 17: Sammelleitung
- 18: Einlassöffnung
- 19: Auslassöffnen
- 20: Engstelle
- 21: Transportkanal
- 22: Rückführkanal
- 23: Einlassöffnung
- 24: Auslassöffnung
- 25: Eintrittsöffnung
- 26: Austrittsöffnung
- 27: Strömungskammer
- 28: Auslassöffnung
- 29: Einlassöffnung
- 30: Engstelle
- T: Transportrichtung

## Patentansprüche

1. Zellrahmen (4) zur Bildung einer elektrochemischen Zelle (2), insbesondere einer Redox-Flow-Batterie, umfangsseitig umschließend wenigstens einen Zellinnenraum (5) und umfassend wenigstens einen Zuführkanal (13) zum Zuführen von Elektrolyt in den Zellinnenraum (5), wobei der Zuführkanal (13) eine von dem Zellinnenraum (5) beabstandete Einlassöffnung (18) für den zuzuführenden Elektrolyten und eine an den Zellinnenraum (5) angrenzende Auslassöffnung (19) zum Ausströmen des zuzuführenden Elektrolyten in den Zellinnenraum (5) aufweist,
**dadurch gekennzeichnet, dass** der Zuführkanal (13) wenigstens einen die Einlassöffnung (18) mit der Auslassöffnung (19) wenigstens abschnittsweise verbindenden Transportkanal (21) zum Transportieren des Elektrolyt durch den Zuführkanal (13) in den Zellinnenraum (5) und wenigstens einen Rückführkanal (22) zum teilweisen Zurückführen des zuzuführenden Elektrolyten entgegen der Transportrichtung (T) des zuzuführenden Elektrolyten im Transportkanal (21) aufweist, dass der Rückführkanal (22) über jeweils wenigstens eine in der Transportrichtung (T) des zuzuführenden Elektrolyten voneinander beabstandeten Eintrittsöffnung (25) zum Eintreten des zurückzuführenden Elektrolyten und Austrittsöffnung (26) zum Austreten des zurückzuführenden Elektrolyten in fluidem Kontakt mit dem Transportkanal (21) steht.

2. Zellrahmen nach Anspruch 1,
**dadurch gekennzeichnet, dass** der Transportkanal (21) wenigstens abschnittsweise zwischen der wenigstens einen Eintrittsöffnung (25) und der wenigstens einen Austrittsöffnung (26) jeweils des Rückführkanals eine Strömungskammer (27) derart aufweist, dass das zuzuführende Elektrolyt abwechselnd, vorzugsweise in einer wenigstens im Wesentlichen konstanten Frequenz, in wenigstens zwei unterschiedlichen Hauptströmungen in Richtung der Auslassöffnung (19) durch die Strömungskammer (27) strömen und infolgedessen in wenigstens zwei unterschiedlichen Auslassrichtungen aus der Auslassöffnung (19) in den Zellinnenraum (5) strömen kann und dass, vorzugsweise, die Strömungskammer (27) derart ausgebildet ist, dass die Frequenz mit zunehmendem Volumenstrom durch den Transportkanal (21), wenigstens im Wesentlichen linear, ansteigt.

3. Zellrahmen nach Anspruch 1 oder 2,
**dadurch gekennzeichnet, dass** der Transportkanal (21) wenigstens abschnittsweise zwischen der wenigstens einen Eintrittsöffnung (25) und der wenigstens einen Austrittsöffnung (26) jeweils des Rückführkanals (22) eine Strömungskammer (27) derart aufweist, dass die Strömungskammer (27) wenigstens abschnittsweise einen freien Strömungsquerschnitt mit einer Querschnittsfläche bildet, die wenigstens dem 2-fachen, vorzugsweise wenigstens dem 2,5-fachen, insbesondere wenigstens dem 3-fachen, der Querschnittsfläche des freien Strömungsquerschnitts der Einlassöffnung (18,23) und/oder der Auslassöffnung (19,24) des Zuführkanals (13) und/oder des Transportkanals (21) entspricht.

4. Zellrahmen nach Anspruch 2 oder 3
**dadurch gekennzeichnet, dass** die Querschnittsfläche des freien Strömungsquerschnitts der Auslassöffnung (19) des Zuführkanals (13) größer ist als die Querschnittsfläche des freien Strömungsquerschnitts der Auslassöffnung (28) der Strömungskammer (27) und dass, vorzugsweise, der Transportkanal (21), vorzugsweise direkt, nach der Strömungskammer (27) in der Transportrichtung (T) des zuzuführenden Elektrolyten sich trichterförmig erweiternd, insbesondere in die Auslassöffnung (19) des Zuführkanals (13) übergehend, ausgebildet ist.

5. Zellrahmen nach einem der Ansprüche 1 bis 4,
**dadurch gekennzeichnet, dass** der Zuführkanal (13) wenigstens zwei Rückführkanäle (22) zum teilweisen Zurückführen des zuzuführenden Elektrolyten entgegen der Transportrichtung (T) des zuzuführenden Elektrolyten im Transportkanal (21) aufweist, dass die Rückführkanäle (22) auf einander gegenüberliegenden Seiten des Transportkanals (21) angeordnet sind und dass, vorzugsweise, die Rückführkanäle (22) untereinander unverbunden sind.

6. Zellrahmen nach einem der Ansprüche 1 bis 5,
**dadurch gekennzeichnet, dass** wenigstens zwei, vorzugsweise wenigstens vier, insbesondere wenigstens sechs, Zuführkanäle (13) vorgesehen sind und dass, vorzugsweise, die Zuführkanäle (13) auf derselben Seite des Zellrahmens (4) und/oder untereinander unverbunden vorgesehen sind und dass, weiter vorzugsweise, die Zuführkanäle (13) eintrittsseitig mit einer gemeinsamen Versorgungsleitung (11) verbunden sind.

7. Zellrahmen nach einem der Ansprüche 1 bis 6,
**dadurch gekennzeichnet, dass** im Zellinnenraum (5) ein, vorzugsweise den Zellinnenraum (5) wenigstens im Wesentlichen vollständig auffüllendes, Füllelement mit einer offenporigen Struktur vorgesehen ist und dass, vorzugsweise, das Füllelement einteilig, filzartig, aus Graphit und/oder als Elektrode (6) ausgebildet ist.

8. Zellrahmen nach einem der Ansprüche 1 bis 7,
**dadurch gekennzeichnet, dass** die Auslasskanäle (14) und/oder die Zuführkanäle (13) wenigstens eines Zellrahmens (4) wenigstens im Wesentlichen gleichmäßig über eine Seite des wenigstens einen Zellrahmens (4) verteilt angeordnet sind.

9. Elektrochemische Zelle (2), insbesondere einer Redox-Flow-Batterie, mit zwei Halbzellen (3), wobei die Halbzellen durch wenigstens eine semipermeable Membran (7) voneinander getrennt sind und jeweils wenigstens einen umfangsseitig wenigstens einen Zellinnenraum (5) zum Durchströmen von Elektrolyt umschließenden Zellrahmen (4) aufweisen,
**dadurch gekennzeichnet, dass** wenigstens ein Zellrahmen (4) nach einem der Ansprüche 1 bis 8 ausgebildet ist.

10. Elektrochemische Zelle nach Anspruch 9,
**dadurch gekennzeichnet, dass** der wenigstens eine Zellinnenraum (5) umfangseitig durch den Zellrahmen (4), zu einer Seite durch die semipermeable Membran (7) und zur gegenüberliegenden Seite durch eine Elektrode (6) oder eine bipolare Platte begrenzt ist und/oder dass der Zellinnenraum (5) und der Zellrahmen (4) umlaufend in einer Rahmenebene angeordnet ist.

11. Elektrochemische Zelle nach Anspruch 10,
**dadurch gekennzeichnet, dass** der Zuführkanal (13), der Transportkanal (21) und/oder der Rückführkanal (22) wenigstens im Wesentlichen parallel zur Rahmenebene ausgerichtet ist und dass, vorzugsweise, der Zuführkanal (13), der Transportkanal (21) und/oder der Rückführkanal (22) über seine gesamte Längserstreckung in der Rahmenebene angeordnet sind.

12. Zellstack (1), insbesondere einer Redox-Flow-Batterie, umfassend eine Vielzahl von nebeneinander angeordneten, aneinander angrenzenden und untereinander fest verbundenen elektrochemischen Zellen (2),
**dadurch gekennzeichnet, dass** die elektrochemischen Zellen (2) nach einem der Ansprüche 9 bis 11 ausgebildet sind.

13. Verfahren zum Betrieb einer elektrochemischen Zelle (2) nach einem der Ansprüche 9 bis 11 oder eines Zellstacks nach Anspruch 12,
- bei dem wenigstens einem Zellinnenraum (5) wenigstens eines Zellrahmens (4) wenigstens einer Halbzelle (3) Elektrolyt über einen Zuführkanal (13) zugeführt wird,
- bei dem der Elektrolyt beim Durchströmen des Transportkanals (21), insbesondere der Strömungskammer (27), zeitlich abwechselnd wenigstens zwei unterschiedliche Hauptströmungen in Richtung der Auslassöffnung ausbildet und infolgedessen abwechselnd in wenigstens zwei unterschiedlichen Auslassrichtungen aus der Auslassöffnung (19,24) in den Zellinnenraum (5) strömt.

14. Verfahren nach Anspruch 13,
- bei dem die Strömung des Elektrolyten beim Durchströmen des Transportkanals (21), insbesondere der Strömungskammer (27) zeitlich abwechselnd zwischen den wenigstens zwei Hauptströmungen, vorzugsweise mit konstanter Frequenz, umschlägt und
- bei dem, vorzugsweise, die Frequenz des Umschlagens der Strömung des zuzuführenden Elektrolyten abwechselnd in die wenigstens zwei Hauptströmungen wenigstens im Wesentlichen proportional zum Volumenstrom des zuzuführenden Elektrolyten ist.

15. Verfahren nach einem der Ansprüche 13 oder 14,
- bei dem die wenigstens zwei Hauptströmungen gegenüberliegenden Seiten der Strömungskammer (27) und, vorzugsweise, gegenüberliegenden Rückführkanälen (22) zugeordnet sind und/oder
- bei dem das zuzuführende Elektrolyt von wenigstens einer gemeinsamen Versorgungsleitung (11) auf mehrere Zuführkanäle (13) wenigstens eines Zellrahmens (4) aufgeteilt und parallel über die Zuführkanäle (13) dem Zellinnenraum (5) zugeführt wird.

## Claims

1. Cell frame (4) for forming an electrochemical cell (2), in particular a redox flow battery, peripherally enclosing at least one cell interior (5) and comprising at least one supply channel (13) for supply electrolyte into the cell interior (5), wherein the supply channel (13) has an inlet opening (18) for the electrolyte to be supplied, which is spaced apart from the cell interior (5), and an outlet opening (19) adjacent to the cell interior (5) for the electrolyte to be supplied to flow out into the cell interior (5),
**characterized in that** the supply channel (13) has at least one transport channel (21), which connects the inlet opening (18) to the outlet opening (19) at least in sections, for transporting the electrolyte through the supply channel (13) into the cell interior (5) and at least one return channel (22) for partially returning the electrolyte to be supplied counter to the transport direction (T) of the electrolyte to be returned in the transport channel (21), that the return channel (22) is in fluid contact with the transport channel (21) via a respective at least one inlet opening (25) for the entry of the electrolyte to be returned and outlet opening (26) for the exit of the electrolyte to be returned, spaced apart in the transport direction (T) of the electrolyte to be supplied,.

2. Cell frame according to claim 1,
**characterized in that** the transport channel (21) has a flow chamber (27) at least in sections between the at least one inlet opening (25) and the at least one outlet opening (26) respectively of the return channel in such a way that the electrolyte to be supplied alternately, preferably at an at least substantially constant frequency, in at least two different main flows in the direction of the outlet opening (19) through the flow chamber (27) and, as a result, can flow in at least two different outlet directions from the outlet opening (19) into the cell interior (5) and that, preferably, the flow chamber (27) is configured in such a way that the frequency increases, at least substantially linearly, with increasing volume flow through the transport channel (21).

3. Cell frame according to claim 1 or 2,
**characterized in that** the transport channel (21) has a flow chamber (27) at least in sections between the at least one inlet opening (25) and the at least one outlet opening (26) of the return channel (22) in such a way that the flow chamber (27) forms a free flow cross-section with a cross-sectional area, which corresponds at least in sections to at least 2 times, preferably at least 2.5 times, in particular at least 3 times, the cross-sectional area of the free flow cross-section of the inlet opening (18, 23) and/or the outlet opening (19, 24) of the supply channel (13) and/or the transport channel (21).

4. Cell frame according to claim 2 or 3
**characterized in that** the cross-sectional area of the free flow cross-section of the outlet opening (19) of the feed channel (13) is larger than the cross-sectional area of the free flow cross-section of the outlet opening (28) of the flow chamber (27) and that, preferably, the transport channel (21), preferably directly after the flow chamber (27) in the transport direction (T) of the electrolyte to be supplied, is formed to widen in the shape of a funnel, in particular merging into the outlet opening (19) of the supply channel (13).

5. Cell frame according to one of claims 1 to 4,
**characterized in that** the supply channel (13) has at least two return channels (22) for partially returning the electrolyte to be supplied against the transport direction (T) of the electrolyte to be supplied in the transport channel (21), that the return channels (22) are arranged on opposite sides of the transport channel (21) and that, preferably, the return channels (22) are unconnected to one another.

6. Cell frame according to one of claims 1 to 5,
**characterized in that** at least two, preferably at least four, in particular at least six, supply channels (13) are provided and that, preferably, the supply channels (13) are provided on a same side of the cell frame (4) and/or are unconnected to one another and that, further preferably, the feed channels (13) are connected on an inlet side to a common supply line (11).

7. Cell frame according to one of claims 1 to 6,
**characterized in that** a filling element with an open-pored structure is provided in the cell interior (5), preferably filling the cell interior (5) at least essentially completely, and that, preferably, the filling element is formed in one piece, felt-like, from graphite and/or as an electrode (6).

8. Cell frame according to any one of claims 1 to 7,
**characterized in that** the outlet channels (14) and/or the supply channels (13) of at least one cell frame (4) are arranged at least substantially evenly distributed over one side of the at least one cell frame (4).

9. Electrochemical cell (2), in particular of a redox flow battery, with two half cells (3), the half cells being separated from one another by at least one semipermeable membrane (7) and each having at least one cell frame (4) peripherally enclosing at least one cell interior (5) for electrolyte to flow through,
**characterized in that** at least one cell frame (4) is formed according to one of claims 1 to 8.

10. Electrochemical cell according to claim 9,
**characterized in that** the at least one cell interior (5) is peripherally bounded by the cell frame (4), on one side by the semipermeable membrane (7) and on the opposite side by an electrode (6) or a bipolar plate and/or that the cell interior (5) and the cell frame (4) are arranged circumferentially in a frame plane.

11. Electrochemical cell according to claim 10,
**characterized in that** the supply channel (13), the transport channel (21) and/or the return channel (22) is aligned at least essentially parallel to the frame plane and that, preferably, the supply channel (13), the transport channel (21) and/or the return channel (22) are arranged over its entire longitudinal extent in the frame plane.

12. Cell stack (1), in particular of a redox flow battery, comprising a plurality of electrochemical cells (2) arranged next to one another, adjacent to one another and firmly connected to one another,
**characterized in that** the electrochemical cells (2) are formed according to one of claims 9 to 11.

13. Method of operating an electrochemical cell (2) according to any one of claims 9 to 11 or a cell stack according to claim 12,
- in which electrolyte is supplied to at least one cell interior (5) of at least one cell frame (4) of at least one half cell (3) via a supply channel (13),
- in which the electrolyte, when flowing through the transport channel(21), in particular the flow chamber (27), alternately forms at least two different main flows in the direction of the outlet opening and consequently flows alternately in at least two different outlet directions from the outlet opening (19, 24) into the cell interior (5).

14. Method according to claim 13,
- in which the flow of the electrolyte alternates in time between the at least two main flows, preferably at a constant frequency, as it flows through the transport channel(21), in particular the flow chamber (27), and
- in which, preferably, the frequency of the alternating of the flow of the electrolyte to be supplied alternately into the at least two main flows is at least substantially proportional to the volume flow of the electrolyte to be supplied.

15. Method according to any one of claims 13 or 14,
- in which the at least two main flows are assigned to opposite sides of the flow chamber (27) and, preferably, to opposite return channels (22) and/or
- in which the electrolyte to be supplied is distributed from at least one common supply line (11) to a plurality of supply channels (13) of at least one cell frame (4) and is supplied in parallel to the cell interior (5) via the supply channels (13).

## Revendications

1. Cadre de cellule (4) pour formation d'une cellule électrochimique (2), en particulier d'une batterie à flux redox, entourant de manière périphérique au moins un espace intérieur de cellule (5) et comprenant au moins un canal d'alimentation (13) pour une alimentation d'électrolyte dans l'espace intérieur de cellule (5), où le canal d'alimentation (13) a
une ouverture d'entrée (18) pour l'électrolyte à alimenter, située à distance de l'espace intérieur de cellule (5), et une ouverture de sortie (19) adjacente à l'espace intérieur de cellule (5), pour l'écoulement de l'électrolyte à alimenter dans l'espace intérieur de cellule (5),
**caractérisé en ce que en ce que**
le canal d'alimentation (13) a au moins un canal de transport (21) reliant au moins par sections l'ouverture d'entrée (18) à l'ouverture de sortie (19) pour transporter l'électrolyte à travers le canal d'alimentation (13) dans l'espace intérieur de cellule (5) et au moins un canal de retour (22) pour ramener partiellement l'électrolyte à alimenter dans le sens inverse du sens de transport (T) de l'électrolyte à alimenter dans le canal de transport (21), que le canal de retour (22) est en contact fluidique avec le canal de transport (21) par l'intermédiaire d'au moins une ouverture d'entrée (25) pour l'entrée de l'électrolyte à ramener et d'une ouverture de sortie (26) pour la sortie de l'électrolyte à ramener, espacées l'une de l'autre dans le sens de transport (T) de l'électrolyte à alimenter.

2. Cadre de cellule selon la revendication 1,
**caractérisé en ce que**
le canal de transport (21) a, au moins par sections entre l'au moins une ouverture d'entrée (25) et l'au moins une ouverture de sortie (26) respectivement du canal de retour, une chambre d'écoulement (27) de telle sorte que l'électrolyte à alimenter s'écoule alternativement, de préférence à une fréquence au moins essentiellement constante, à travers la chambre d'écoulement (27) dans au moins deux flux principaux différents en direction de l'ouverture de sortie (19) et, par conséquent, paut s'écouler dans au moins deux directions de sortie différentes à partir de l'ouverture de sortie (19) dans l'espace intérieur de cellule (5), et que, de préférence, la chambre d'écoulement (27) est configuré de telle sorte que la fréquence augmente, au moins essentiellement linéairement, avec l'augmentation du débit volumique à travers le canal de transport (21).

3. Cadre de cellule selon la revendication 1 ou 2,
**caractérisé en ce que**
le canal de transport (21) a au moins par sections entre l'au moins une ouverture d'entrée (25) et l'au moins une ouverture de sortie (26) respectivement du canal de retour (22) une chambre d'écoulement (27) de telle sorte que la chambre d'écoulement (27) forme au moins par sections une section transversale d'écoulement libre avec une surface de section transversale, qui correspond au moins à 2 fois, de préférence au moins à 2,5 fois, en particulier au moins à 3 fois, la surface de la section transversale de la section transversale d'écoulement libre de l'ouverture d'entrée (18, 23) et/ou de l'ouverture de sortie (19, 24) du canal d'alimentation (13) et/ou du canal de transport (21).

4. Cadre de cellule selon la revendication 2 ou 3,
**caractérisé en ce que**
la surface de section transversale de la section transversale d'écoulement libre de l'ouverture de sortie (19) du canal d'alimentation (13) est supérieure à la surface de section transversale de la section transversale d'écoulement libre de l'ouverture de sortie (28) de la chambre d'écoulement (27) et que, de préférence, le canal de transport (21) est formé, de préférence directement, en aval de la chambre d'écoulement (27) dans la direction de transport (T) de l'électrolyte à alimenter, en s'élargissant en forme d'entonnoir, en particulier en se transformant en l'ouverture de sortie (19) du canal d'alimentation (13).

5. Cadre de cellule selon l'une des revendications 1 à 4,
**caractérisé en ce que**
le canal d'alimentation (13) comporte au moins deux canaux de retour (22) pour un retour partiel de l'électrolyte à alimenter dans le sens inverse du sens de transport (T) de l'électrolyte à alimenter dans le canal de transport (21), que les canaux de retour (22) sont disposés sur des côtés opposés du canal de transport (21) et que, de préférence, les canaux de retour (22) sont inreliés entre eux.

6. Cadre de cellule selon l'une des revendications 1 à 5,
**caractérisé en ce qu'**
au moins deux, de préférence au moins quatre, en particulier au moins six, canaux d'alimentation (13) sont prévus et que, de préférence, les canaux d'alimentation (13) sont prévus du même côté du cadre cellulaire (4) et/ou non reliés entre eux et que, de préférence, les canaux d'alimentation (13) sont reliés côté entrée à une conduite d'alimentation commune (11).

7. Cadre de cellule selon l'une des revendications 1 à 6,
**caractérisé en ce qu'**
il est prévu dans l'espace intérieur de cellule (5) un élément de remplissage, de préférence remplissant au moins essentiellement complètement l'espace intérieur de cellule (5), avec une structure à pores ouverts, et que, de préférence, l'élément de remplissage est formé d'une seule pièce, en feutre, en graphite et/ou sous forme d'électrode (6).

8. Cadre de cellule selon l'une des revendications 1 à 7,
**caractérisé en ce que**
les canaux de sortie (14) et/ou les canaux d'alimentation (13) d'au moins un cadre cellulaire (4) sont répartis au moins essentiellement uniformément sur un côté dudit au moins un cadre de cellule (4).

9. Cellule électrochimique (2), en particulier d'une batterie à flux redox, avec deux demi-cellules (3), où les demi-cellules sont séparées l'une de l'autre par au moins une membrane semi-perméable (7) et ont
chacune au moins un cadre de cellule (4) entourant de manière périphérique au moins un espace intérieur de cellule (5) pour un passage de l'électrolyte,
**caractérisée en ce qu'**
au moins un cadre de cellule (4) est formé selon l'une des revendications 1 à 8.

10. Cellule électrochimique selon la revendication 9,
**caractérisée en ce que**
l'au moins un espace intérieur de cellule (5) est délimité de manière périphérique par le cadre de cellule (4), d'un côté par la membrane semi-perméable (7) et du côté opposé par une électrode (6) ou une plaque bipolaire et/ou que l'espace intérieur de cellule (5) et le cadre de cellule (4) sont disposés de manière périphérique dans un plan de cadre.

11. Cellule électrochimique selon la revendication 10,
**caractérisée en ce que**
le canal d'alimentation (13), le canal de transport (21) et/ou le canal de retour (22) est orienté au moins essentiellement parallèlement au plan du cadre et que, de préférence, le canal d'alimentation (13), le canal de transport (21) et/ou le canal de retour (22) sont disposés dans le plan du cadre sur toute son extension longitudinale.

12. Empilement de cellules (1), en particulier d'une batterie à flux redox, comprenant une pluralité de cellules électrochimiques (2) l'une positionnées à côté de l'autre, adjacentes et fixées les unes des autres,
**caractérisé en ce que**
les cellules électrochimiques (2) sont formées selon l'une des revendications 9 à 11.

13. Procédé de fonctionnement d'une cellule électrochimique (2) selon l'une des revendications 9 à 11 ou d'un empilement de cellules selon la revendication 12,
- dans lequel au moins un espace intérieur de cellule (5) d'au moins un cadre de cellule (4) d'au moins une demi-cellule (3) est alimenté de l'électrolyte par un canal d'alimentation (13),
- dans lequel l'électrolyte, lorsqu'il traverse le canal de transport(21), en particulier la chambre d'écoulement (27), forme alternativement dans le temps au moins deux écoulements principaux différents en direction de l'ouverture de sortie et s'écoule par conséquent alternativement dans au moins deux directions de sortie différentes à partir de l'ouverture de sortie (19, 24) dans l'espace intérieur de cellule (5).

14. Procédé selon la revendication 13,
- dans lequel l'écoulement de l'électrolyte lors de une traversée du canal de transport(21), en particulier de la chambre d'écoulement (27), alterne dans le temps entre les au moins deux écoulements principaux, de préférence avec une fréquence constante, et
- dans lequel, de préférence, la fréquence d'alternation de l'écoulement de l'électrolyte à alimenter en alternance dans les au moins deux écoulements principaux est au moins essentiellement proportionnelle au débit volumique de l'électrolyte à alimenter.

15. Procédé selon l'une des revendications 13 ou 14,
- dans lequel les au moins deux flux principaux sont associés à des côtés opposés de la chambre d'écoulement (27) et, de préférence, à des canaux de retour (22) opposés et/ou
- dans lequel l'électrolyte à alimenter est réparti par au moins une conduite d'alimentation (11) commune sur plusieurs canaux d'alimentation (13) d'au moins un cadre de cellule (4) et est alimenté en parallèle par les canaux d'alimentation (13) à l'espace intérieur de cellule (5).
